Europäisches Patentamt

(19) European Patent Office

Office européen des brevets

(11) Numéro de publication: **0 165 095**
**B1**

## (12) FASCICULE DE BREVET EUROPEEN

(45) Date de publication du fascicule du brevet:
09.12.87

(21) Numéro de dépôt: **85400815.8**

(22) Date de dépôt: **25.04.85**

(51) Int. Cl.⁴: **F 16 F 13/00, B 60 K 5/12**

(54) Support antivibratoire hydraulique.

(30) Priorité: **04.05.84 FR 8406986**

(43) Date de publication de la demande:
**18.12.85 Bulletin 85/51**

(45) Mention de la délivrance du brevet:
**09.12.87 Bulletin 87/50**

(84) Etats contractants désignés:
**AT BE CH DE GB IT LI LU NL SE**

(56) Documents cités:
**EP - A - 0 088 682**
**DE - A - 2 514 295**
**DE - A - 3 016 421**
**DE - A - 3 239 787**
**DE - U - 8 119 912**
**FR - A - 2 155 594**
**US - A - 2 380 899**
**US - A - 4 159 091**

(73) Titulaire: **HUTCHINSON, 2 rue Balzac, F-75008 Paris (FR)**

(72) Inventeur: **Bodin, Francois, 8, rue de la République Jallans, F-28200 Chateaudun (FR)**
Inventeur: **Jouade, Pierre, 21, rue du Mont Barry La Chapelle des Noyers, F-28200 Chateaudun (FR)**
Inventeur: **Le Guillant, Daniel, 1, rue du Val Saint-Aignan, F-28200 Chateaudun (FR)**

(74) Mandataire: **Behaghel, Pierre et al, CABINET PLASSERAUD 84 rue d'Amsterdam, F-75009 Paris (FR)**

ACTORUM AG

## Description

L'invention concerne les dispositifs antivibratoires destinés à être interposés aux fins de support et d'amortissement entre deux éléments rigides, l'amortissement faisant intervenir le refoulement d'un liquide à travers un passage étranglé, et les déplacements relatifs à amortir des deux éléments rigides comprenant d'une part des oscillations de relativement grande amplitude (c'est-à-dire supérieure au mm) à fréquence relativement basse (c'est-à-dire inférieure à 20 Hz) et d'autre part des vibrations de relativement faible amplitude (c'est-à-dire inférieure à 0,5 mm) à fréquence relativement élevée (c'est-à-dire supérieure à 20 Hz).

A titre d'exemple non limitatif, on indique que de tels supports peuvent être montés entre un châssis de véhicule et le moteur de ce véhicule, les oscillations relativement amples à amortir étant celles créées par les irrégularités et variations de déclivité du sol lors de circulation du véhicule sur ce sol et les vibrations à amortir étant celles dues au fonctionnement du moteur.

L'invention concerne plus particulièrement, parmi les supports du genre en question, ceux qui sont constituées par un boîtier étanche interposé entre les deux éléments rigides, boîtier comportant deux pièces rigides solidarisables respectivement avec les deux éléments rigides, une première paroi élastique reliant de façon étanche l'une des deux pièces rigides à une armature annulaire rigide faisant partie de la seconde pièce, cette première paroi délimitant avec la première pièce l'une des deux extrémités axiales du boîtier et assurant le rôle de support entre les deux pièces, ce pour quoi elle présente une bonne résistance à la compression axiale, une seconde paroi élastique portée de manière étanche par l'armature annulaire et délimitant la seconde extrémité axiale du boîtier, une cloison déformable également portée de manière étanche par l'armature annulaire, entre les deux parois élastiques, et divisant l'intérieur du boîtier en deux chambres, savoir une chambre de travail comprise entre la cloison et la première paroi élastique et une chambre de compensation comprise entre la cloison et la seconde paroi élastique, ces deux chambres communiquant entre elles par le passage étranglé ci-dessus, des moyens pour limiter à une amplitude faible, c'est-à-dire inférieure à 1 mm, les déformations de la cloison selon la direction axiale perpendiculaire à son plan moyen, et une masse liquide remplissant les deux chambres ainsi que le passage étranglé.

Avec un tel support (voir par exemple EP-A-88 682), une vibration de fréquence élevée et de faible amplitude exercée entre les deux éléments rigides engendre des déplacements relatifs correspondants des deux pièces rigides, lesquels sont transmis à la cloison déformable par le liquide contenu dans la chambre de travail et se traduisent par une succession rapide de déformations alternatives de cette cloison perpendiculairement à elle-même, d'amplitude inférieure à la valeur maximum possible: les dimensions de la cloison sont choisies suffisantes pour que celle-ci puisse ainsi absorber les déplacements signalés sans que le liquide soit refoulé à travers le passage étranglé selon des sens opposés en synchronisme avec la vibration.

Au contraire, pour les oscillations d'amplitude plus élevée et de fréquence plus basse, l'amplitude des déformations correspondantes de la cloison atteint sa valeur maximum possible et le liquide est alors refoulé à travers le passage étranglé, ce qui assure l'amortissement hydraulique de ce liquide par son étranglement dans ce passage.

Avec les modes de réalisation actuels des supports du genre en question, la masse supportée (moteur ou autre) n'est reliée à la structure portante (châssis du véhicule) que par les premières parois élastiques de ces supports.

Il peut donc arriver que certaines sollicitations anormalement élevées exercées sur la masse supportée, telles que celles dues à des décélérations ou accélérations brusques, se traduisent par des déformations excessives de ces parois pouvant entraîner leur arrachement ou leur rupture et engendrer des chocs générateurs de dommages entre ladite masse supportée et son environnement immédiat.

L'invention a pour but, surtout, de remédier à cet inconvénient en limitant par butée les déformations en question.

A cet effet les supports du genre en question selon l'invention sont essentiellement caractérisés en ce qu'ils comprennent:

— un anneau rigide porté par l'armature annulaire, entre la cloison déformable et la première paroi élastique, anneau dont le bord interne plonge dans la chambre de travail,

— et un pied prolongeant la première pièce rigide vers l'intérieur de la chambre de travail, pied traversant avec jeu l'anneau et terminé au-delà de cet anneau par une semelle débordante dont la section droite est supérieure à la section de passage de l'anneau.

Dans des modes de réalisation préférés, on a recours en outre à l'une et/ou à l'autre des dispositions suivantes:

— les faces, du pied et/ou de la semelle, susceptibles de venir en butée contre des portées en regard de l'anneau rigide ou d'autres composants du support, sont revêtues d'un coussin de caoutchouc ou matériau analogue,

— le pied est constitué par un pion cylindrique et la semelle par une plaquette rapportée axialement sur l'extrémité libre de ce pion,

— l'anneau rigide comporte une rondelle plate intérieure disposée à l'intérieur de la première paroi élastique et raccordée par une portion annulaire incurvée en S à une rondelle plate extérieure décalée axialement par rapport à la rondelle intérieure et serrée axialement entre la première paroi élastique et la portion périphérique du siège de la cloison déformable.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

La figure 1, de ce dessin, montre en coupe axiale un support antivibratoire établi conformément à l'invention.

La figure 2 montre semblablement une variante d'une portion de ce support également conforme à l'invention.

Ledit support est destiné à être interposé verticalement entre un organe porteur rigide constitué par un châssis de véhicule et un organe supporté rigide constitué par un moteur à combustion interne.

Les termes «haut, bas, supérieur et inférieur» utilisés dans la description qui suit le sont à titre d'exemple non limitatif car le support décrit peur parfaitement être utilisé à l'envers du sens adopté pour cette description.

Le support considéré se présente sous la forme générale d'un boîtier étanche comportant:

— une cuvette inférieure rigide 1 dont le bord incurvé $1_1$ constitue une virole ou armature annulaire permettant d'assembler l'ensemble par sertissage, comme il sera exposé plus loin, ladite cuvette étant solidarisée, notamment par soudure, avec une patte 2 facile à monter sur le châssis du véhicule,

— un chapeau rigide comportant un corps tronconique plein 3 évasé vers le haut, lui-même coiffé par un disque 4 et prolongé par un goujon fileté 5 en attente,

— une paroi tronconique épaisse et étanche 6 en caoutchouc ou matériau élastique analogue présentant une bonne résistance à la compression axiale et à la flexion transversale et adhérée respectivement sur le corps 3 et sur un renfort annulaire 7 profilé en Z, renfort lui-même lié de façon étanche à la virole $1_1$,

— et une paroi élastique étanche 8 dont le pourtour est également lié de façon étanche à la virole $1_1$, paroi constituée de préférence par une membrane flexible mince plissée selon des anneaux concentriques.

Une cloison déformable 9 divise l'intérieur du boîtier en deux chambres, savoir une chambre supérieure «de travail» A, du côté de la paroi 6, et une chambre inférieure «de compensation» B du côté de la paroi 8.

Ces deux chambres A et B sont remplies de liquide et la communication entre elles est assurée en permanence à travers un passage étranglé 10.

Dans le mode de réalisation illustré, la cloison 9 est constituée par une membrane flexible dont le bord est fixé sur un siège annulaire rigide 11 lui-même prolongé extérieurement par un rebord annulaire $11_1$.

Le passage 10 est ici constitué par un canal curviligne évidé dans le rebord $11_1$, canal s'étendant selon un arc de cercle compris entre 180 et 300° et raccordé à ses deux extrémités avec respectivement les deux chambres A et B.

Des moyens connus en soi sont en outre prévus pour limiter les déformations de la membrane 9 à une amplitude faible, savoir inférieure à 1 mm.

On prévoit en outre, selon l'invention, des moyens de butée permettant de limiter les déformations de la paroi tronconique 6 dans n'importe quelle direction et d'interdire ainsi d'une part les détériorations, voire les ruptures, de cette paroi 6, et d'autre part les chocs fâcheux entre le moteur supporté et les parois de l'habitacle de ce moteur.

Ces moyens de butée comprennent:

— d'une part, un anneau rigide 12 dont le bord intérieur s'étend dans la chambre de travail A,

— et d'autre part, un pied 13 prolongeant axialement vers le bas le corps 3, pied traversant avec un jeu radial j l'anneau 12 et terminé au-delà de cet anneau par une semelle 14 débordante transversalement.

Le pied 13 est avantageusement constitué par un pion cylindrique logé dans un évidement complémentaire du corps 3 et formant une seule pièce avec le goujon 5, qui prolonge ce pion vers le haut.

La semelle débordante 14 se présente avantageusement sous la forme d'une plaquette qui peut faire corps avec le pion 13 ou être rapportée axialement contre l'extrémité de ce pion.

La section transversale de la semelle 14 est nettement supérieure à celle du passage libre évidé dans l'anneau.

La face supérieure de la marge débordante de la semelle 14, c'est-à-dire sa face tournée vers l'anneau 12, est revêtue d'un coussin annulaire 15 en caoutchouc ou matériau élastique analogue.

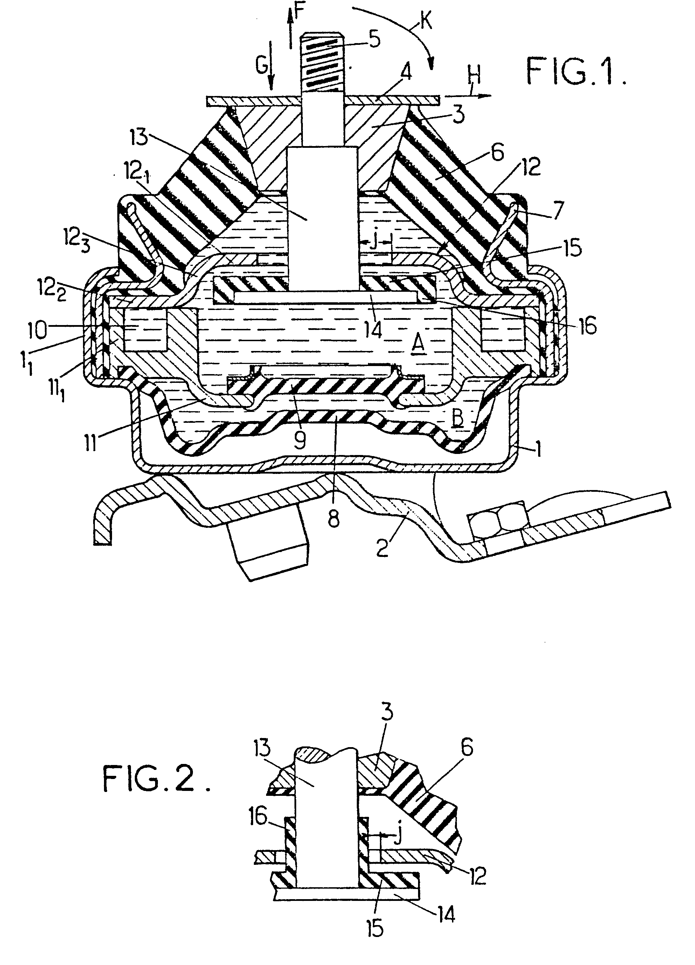

Un manchon 16, également constitué en caoutchouc ou analogue, est prévu sur la face périphérique, du pied 13 ou de la semelle 14, susceptible de venir buter radialement contre une portée en regard: c'est le cas de la semelle 14 sur la figure 1 et de la base du pied 13 raccordée à la semelle sur la figure 2.

Le jeu radial j entre le pied 13 et l'anneau 12 doit être suffisant pour que le passage du liquide amortisseur à ce niveau ne soit pas étranglé au point de dérégler le fonctionnement de l'amortisseur.

Ce jeu j doit par contre être assez petit pour que l'anneau 12 puisse jouer efficacement son rôle de butée, précisé ci-après, dans toutes les directions.

Dans le mode de réalisation préféré illustré, l'anneau 12 est constitué, non pas par une simple rondelle plate, mais par une rondelle plate intérieure $12_1$ raccordée à une rondelle plate extérieure $12_2$ décalée axialement par rapport à la rondelle intérieure, par l'intermédiaire d'une portion de raccordement annulaire $12_3$ présentant un profil en S.

Cette construction en forme de cuvette renversée permet à la fois:

— de placer à l'intérieur de la paroi tronconique 6 la rondelle plate intérieure $12_1$ qui constitue la partie active de l'anneau 12 travaillant en butée,

— et de monter l'anneau 12 à l'intérieur du support par simple serrage axial de sa rondelle plate extérieure $12_2$ entre le rebord $11_1$ du siège 11 et la paroi 6 ou plutôt le renfort annulaire 7 de cette paroi 6.

C'est le serrage axial de ces trois pièces ($11_1$, $12_2$, et 7) ainsi que du pourtour de la paroi élastique 8, qui est assuré par sertissage extérieur de la virole 1.

Le rôle de la butée mutuelle entre l'anneau 12 et le pied 13 prolongé par la semelle 14 est joué de la façon suivante.

Dans le cas d'une sollicitation anormalement élevée du moteur vers le haut (selon la flèche F), la paroi 6 se déforme à la traction jusqu'à butée axiale de la portion débordante de la semelle 14 contre le bord de l'anneau 12.

Cette butée s'établit d'abord progressivement grâce à l'interposition du coussin 15, puis elle interrompt totalement la déformation en traction de la paroi 6 lorsque ledit coussin 15 est totalement écrasé.

Dans le cas au contraire d'une forte sollicitation du moteur vers le bas (selon la flèche G), la paroi 6 commence par se déformer par compression et flexion en s'écrasant progressivement contre l'anneau 12 jusqu'à butée axiale finale du corps 3 lui-même contre ledit anneau.

Enfin, dans le cas d'une sollicitation latérale horizontale (selon la flèche H) ou de basculement (selon la flèche K), c'est la tranche périphérique de la semelle 14 ou la paroi latérale de la base du pied 13 qui vient buter contre la portée transversale en regard du support avec encore une première phase d'écrasement élastique:

— dans le cas de la figure 1, pour laquelle le jeu j est relativement grand, la butée est établie entre la tranche de la semelle 14 et la zone incurvée $12_3$ de l'anneau 12,

— dans le cas de la figure 2, qui fait apparaître un jeu j plus petit, la butée est réalisée entre la base du pied 13 et la tranche interne de la rondelle intérieure $12_1$.

Ainsi, dans tous les cas où une sollicitation anormalement élevée est exercée sur le moteur supporté, par exemple dans le cas d'une décélération brusque du véhicule, on observe une interruption d'abord progressive et finalement extrêmement ferme et sûre des déformations de la paroi 6.

En suite de quoi, et quel que soit le mode de réalisation adopté, on dispose finalement d'un support dont la constitution et le fonctionnement résultent suffisamment de ce qui précède.

Ce support présente sur ceux antérieurement connus l'important avantage d'assurer un ancrage très solide de la première pièce rigide sur la seconde, c'est-à-dire, dans l'application citée à titre d'exemple, du moteur sur le châssis du véhicule, vu la limitation par butée élastique qui est imposée, dans un tel support, aux déformations de la paroi 6 lors de l'exercice de sollicitations anormalement élevées sur la masse supportée.

Comme il va de soi, et comme il résulte d'ailleurs déjà de ce qui précède, l'invention ne se limite nullement à ceux de ses modes d'application et de réalisation qui ont été plus spécialement envisagés: elle en embrasse, au contraire, toutes les variantes, notamment:

— celles où la semelle débordante 14 et son revêtement 15 seraient percés de trous ou encoches les traversant axialement de part en part, de façon à faciliter la libre circulation du liquide entre cette semelle et l'anneau 12,

— celles où les coussins de caoutchouc ou autre matière élastique destinés à amortir les chocs entre la butée centrale (pied et/ou semelle) et les portées en regard seraient prévus sur ces portées au lieu de l'être sur cette butée, ou en supplément à ceux prévus sur cette butée,

— celles où lesdits coussins, tout en demeurant de révolution autour de l'axe du support, auraient une épaisseur variable et non constante sur toute leur étendue,

— celles où le profil de la butée centrale (pied et/ ou semelle) et/ou celui des portées en regard serait déterminé de façon à obtenir la progressivité voulue des différentes butées élastiques observées lors de l'exercice de sollicitations anormalement élevées sur la masse supportée, les faces en regard de l'anneau 12 et de la butée centrale 13, 14 pouvant en particulier être non plus planes, mais tronconiques, avec des angles de conicité identiques ou non, le demi-angle au sommet de chaque cône considéré, d'axe confondu avec celui du support, étant notamment de l'ordre de 60 à 80 degrés: dans ce dernier cas, la forme de la rondelle interne $12_1$ est tronconique et se rapproche de celle de la face interne de la paroi tronconique 6.

## Revendications

1. Dispositif antivibratoire destiné à être interposé aux fins de support et d'amortissement entre deux éléments rigides, constitué par un boîtier étanche interposé entre les deux éléments rigides, boîtier comportant deux pièces rigides (1-2, 3-5) solidarisables respectivement avec les deux éléments rigides, une première paroi élastique (6) reliant de façon étanche l'une des deux pièces rigides (3-5) à une armature angulaire ($1_1$) faisant partie de l'autre pièce (1-2) et assurant le rôle de support entre les deux pièces, une seconde paroi élastique (8) portée de manière étanche par l'armature annulaire ($1_1$), une cloison déformable (9) également portée de manière étanche par l'armature annulaire, entre les deux parois élastiques, et divisant l'intérieur du boîtier en deux chambres (A, B), savoir une chambre de travail (A) comprise entre la cloison déformable (9) et la première paroi élastique (6) et une chambre de compensation (B) comprise entre la cloison déformable (9) et la seconde paroi élastique (8), ces deux chambres communiquant entre elles par un passage étranglé (10), des moyens pour limiter à une amplitude faible, c'est-à-dire inférieure à 1 mm, les déformations de la cloison (9) selon la direction axiale perpendiculaire à son plan moyen, et une masse liquide remplissant les deux chambres ainsi que le passage étranglé, caractérisé en ce qu'il comprend un anneau rigide (12) porté par l'armature annulaire ($1_1$), entre la cloison déformable (9) et la première paroi élastique (6), anneau dont le bord interne plonge dans la chambre de travail (A), et un pied (13) prolongeant la première pièce rigide (3) vers l'intérieur de la chambre de travail, pied traversant avec jeu l'anneau rigide (12) et terminé au-delà de cet anneau par une semelle débordante (14) dont la section droite est supérieure à la section de passage de l'anneau.

2. Dispositif selon la revendication 1, caractérisé en ce que les faces, du pied (13) et/ou de la semelle (14), susceptibles de venir en butée contre des portées en regard de l'anneau rigide (12) ou d'autres composants du support, sont revêtues d'un coussin (15, 16) en caoutchouc ou matériau analogue.

3. Dispositif selon l'une quelconque des revendications 1 et 2, caractérisé en ce que le pied (13) est constitué par un pion cylindrique et la semelle (14), par une plaquette rapportée axialement sur l'extrémité libre de ce pion.

4. Dispositif selon l'une quelconque des précédentes revendications, caractérisé en ce que l'anneau rigide comporte une rondelle plate intérieure ($12_1$) disposée à l'intérieur de la première paroi élastique (6) et raccordée par une portion annulaire ($12_3$) incurvée en S à une rondelle plate extérieure ($12_2$) décalée axialement par rapport à la rondelle intérieure et serrée axialement entre la première paroi élastique et la portion périphérique ($11_1$) du siège de la cloison déformable (9).

5. Dispositif selon l'une quelconque des précédentes revendications, caractérisé en ce que les faces en regard de l'anneau rigide (12) et de l'ensemble pied (13) — semelle (14) sont tronconiques.

6. Dispositif selon la revendication 5, caractérisé en ce que les angles de conicité des faces en regard sont identiques, le demi-angle au sommet du cône considéré étant de l'ordre de 60 à 80 degrés.


**Patentansprüche**

1. Antischwingungsvorrichtung, die zur Abstützung und Dämpfung zwischen zwei starre Elemente zwischenschaltbar ist, bestehend aus einem zwischen die zwei starren Elemente zwischenschaltbaren dichten Gehäuse, das zwei starre Abschnitte (1-2, 3-5) hat, die je mit einem der beiden starren Elemente verbindbar sind, einer ersten elastischen Wand (6), welche einen (3-5) der beiden starren Abschnitte mit einem ringförmigen Mantel ($1_1$) abdichtend verbindet, der Teil des anderen Abschnittes (1-2) ist und die Abstützung zwischen den beiden Abschnitten sichert, einer zweiten elastischen Wand (8), die vom ringförmigen Mantel ($1_1$) abdichtend getragen ist, einer verformbaren Trennwand (9), die zwischen den beiden elastischen Wänden ebenfalls abdichtend vom ringförmigen Mantel getragen ist und das Innere des Gehäuses in zwei Kammern (A, B) unterteilt, nämlich eine Arbeitskammer (A) zwischen der verformbaren Trennwand (9) und der ersten elastischen Wand (6) und einer Kompensationskammer (B) zwischen der verformbaren Trennwand (9) und der zweiten elastischen Wand (8), wobei die beiden Kammern miteinander über einen engen Durchgang (10) in Verbindung stehen, mit Mitteln zum Begrenzen der Verformungen der Trennwand (9) in axialer Richtung senkrecht zu ihrer Mittelebene auf eine kleine Amplitude, d.h. kleiner als 1 mm, und mit einer flüssigen Masse, welche die beiden Kammern sowie den engen Durchgang füllt, dadurch gekennzeichnet, dass sie einen starren Ring (12) aufweist, der zwischen der verformbaren Trennwand (9) und der ersten elastischen Wand (6) vom ringförmigen Mantel ($1_1$) getragen ist, wobei der Innenrand des Ringes in die Arbeitskammer (A) eintaucht, und einem Fuss (13), welcher den ersten starren Abschnitt (3) gegen das Innere der Arbeitskammer verlängert, wobei der Fuss den starren Ring (12) mit Spiel durchsetzt und jenseits dieses Ringes in einer vorstehenden Basis (14) endet, deren Querabmessung grösser als der Querschnitt des Ringdurchganges ist.

2. Vorrichtung nach Anspruch 1, dadurch gekennzeichnet, dass die Seiten des Fusses (13) und/oder der Basis (14), die an ihnen zugekehrten Anschlagflächen des starren Ringes (12) oder andere Komponenten der Abstützung anschlagen, mit einem Kissen (15, 16) aus Kautschuk oder dgl. überzogen sind.

3. Vorrichtung nach Anspruch 1 oder 2, dadurch gekennzeichnet, dass der Fuss (13) aus einem zylindrischen Schaft und die Basis (14) durch eine am freien Ende dieses Schaftes axial befestigte Platte gebildet sind.

4. Vorrichtung nach einem der vorstehenden Ansprüche, dadurch gekennzeichnet, dass der starre Ring einen flachen inneren, im Inneren der ersten elastischen Wand (6) angeordneten Wandabschnitt ($12_1$) aufweist, der durch einen S-förmig gekrümmten ringförmigen Wandabschnitte ($12_3$) mit einem flachen äusseren Wandabschnitt ($12_2$) verbunden ist, der axial bezüglich des inneren Wandabschnittes abgesetzt und axial zwischen die erste elastische Wand und den Umfangsabschnitt ($11_1$) des Sitzes der verformbaren Trennwand (9) eingespannt ist.

5. Vorrichtung nach einem der vorstehenden Ansprüche, dadurch gekennzeichnet, dass die dem starren Ring (12) und der Anordnung aus Fuss (13) — Basis (14) gegenüberliegenden Seiten kegelstumpfförmig sind.

6. Vorrichtung nach Anspruch 5, dadurch gekennzeichnet, dass die Konuswinkel der gegenüberliegenden Seiten identisch sind, wobei der Öffnungswinkel an der Konusspitze in der Grössenordnung von 60 bis 80° liegt.


**Claims**

1. Antivibration device designed to be inserted for purposes of support and damping between two rigid elements, constituted by a fluid-tight box, interposed between the two rigid elements, said box comprising two rigid parts (1-2, 3-5) which can be made fast respectively with the two rigid elements, a first elastic wall (6) connecting in fluid-tight manner one of the two rigid parts (3-5) to an annular armature ($1_1$) forming a portion of the other part (1-2) and ensuring the role of support between the two parts, a second elastic wall (8) borne in fluid-tight manner by the annular armature ($1_1$), a deformable partition (9) also borne in fluid-tight manner by the annular armature, between the two elastic walls, and dividing the inside of the box into two chambers (A, B), namely an operating chamber (A) comprised between the deformable partition (9) and the first elastic wall (6) and a compensating chamber (B) comprised between the deformable partition (9) and the second elastic wall (8), said two chambers communicating with one another through a restricted passage (10), means for limiting to a small amplitude, that is to say less than 1 mm, the deformations of the partition (9) in the axial direction perpendicular to its middle plane, and a liquid mass filling the two chambers, as well as the restricted passage, characterized in that it comprises a rigid ring (12) borne by the annular armature ($1_1$), between the deformable partition (9) and the first elastic wall (6), of which ring the inner edge dips into the operating chamber (A), and a foot (13) extending the first rigid part (3) inwards of the operating chamber, said foot traversing with clearance the rigid ring (12) and being terminated beyond said ring by an overlapping sole (14) whose perpendicular cross-section is greater than the passage cross-section of the ring.

2. Device according to claim 1, characterized in that the surfaces, of the foot (13) and/or of the sole (14), which can come into abutment against opposite bearing surfaces of the rigid ring (12) or other componente of the support, are covered with a cushion (15, 16) of rubber or similar material.

3. Device according to any one of claims 1 and 2, characterized in that the foot (13) is constituted by a cylindrical pin and the sole (14) by a small plate attached axially to the free end of this pin.

4. Device according to any one of the preceding claims, characterized in that the rigid ring comprises an inner flat washer ($12_1$) positioned inside the first elastic wall (6) and joined by an annular portion ($12_3$) of incurved S shape to an outer flat washer ($12_2$), axially offset with respect to the inner washer and gripped axially between the first elastic wall and the peripheral portion ($11_1$) of the seat of the deformable partition (9).

5. Device according to any one of the preceding claims, characterized in that the opposite surfaces of the rigid ring (12) and of the foot (13) — sole (14) assembly are frustoconic.

6. Device according to claim 5, characterized in that the angles of conicity of the opposite surfaces are identical, the half angle at the apex of the cone concerned being of the order of 60° to 80°.

0 165 095

F
G
K
5
4
H
FIG.1.
3
13
12₁
6
12
7
12₃
15
12₂
10
14
16
1₁
A
11₁
B
11
1
9
8
2

FIG.2.
3
13
6
16
j
12
15
14

7